# EUROPÄISCHE PATENTANMELDUNG

(11) **EP 4 729 795 A1**
(43) Veröffentlichungstag der Anmeldung: **22.04.2026**
(21) Anmeldenummer: 25206245.0
(22) Anmeldetag: 02.10.2025
(51) Int. Cl.: F16C 13/02, B65H 23/025

(54) **WALZENEINRICHTUNG, WALZE UND ROLLENSCHNEIDMASCHINE**

(30) Priorität: 17.10.2024 DE 102024130150
(71) Anmelder: Voith Patent GmbH, 89522 Heidenheim (DE)
(72) Erfinder: PREISING, Ralf-Harald, 89198 Westerstetten (DE); WITTLINGER, Thomas, 89197 Weidenstetten (DE)
(74) Vertreter: Voith Patent GmbH - Patentabteilung

(57) **Zusammenfassung**

Die vorliegende Erfindung betrifft eine Walzeneinrichtung zur Führung einer Materialbahn, insbesondere einer Faserstoffbahn, umfassend einen hohlzylinderförmigen Walzenmantel der um eine Rotationsachse (R) drehbar ist, einen ersten Lagerabschnitt und einen zweiten Lagerabschnitt, die im Inneren des Walzenmantels angeordnet und dreh- und axialfest mit diesem verbunden sind, wobei der erste Lagerabschnitt einen ersten Achsfortsatz aufweist, der derart in einem ersten Aufnahmeabschnitt eines ersten Lagerschilds, das an einer der Stirnseiten des Walzenmantels angeordnet ist, gelagert ist, dass ein Festlager gebildet ist, und wobei der zweite Lagerabschnitt einen zweiten Achsfortsatz aufweist, der derart in einem zweiten Aufnahmeabschnitt eines zweiten Lagerschilds, das an der anderen Stirnseite des Walzenmantels angeordnet ist, gelagert ist, dass ein Loslager gebildet ist.

## Beschreibung

Die Erfindung betrifft eine Walzeneinrichtung zur Führung einer Materialbahn, insbesondere einer Faserstoffbahn. Bei der Faserstoffbahn kann es sich etwa um eine Papier-, Karton- oder Tissuebahn handeln. Die vorliegende Erfindung ist aber grundsätzlich auch bei Bahnen einsetzbar, die ähnlich wie Faserstoffbahnen zu handhaben sind, wie z. B. Kunststoff- oder Metallfolien.

Beispielsweise in der Papierindustrie kommen Maschine mit großen Walzen zum Einsatz, die zur Führung der erzeugten Bahnen dienen. Diese Walzen werden aufgrund des angestrebten hohen Durchsatzes mit sehr hohen Drehzahlen betrieben und sind daher hohen Belastungen ausgesetzt. In Papiermaschinen sind Walzen mit Breiten von über 11 m keine Seltenheit. Es wurden daher sog. Segmentwalzen entwickelt, die mehrere nebeneinander angeordnete Walzeneinrichtungen oder Segmente umfassen, die unabhängig voneinander ausgetauscht werden können. Dabei ist es erwünscht, dass der Wechsel eines Segments beispielsweise in der Mitte der Segmentwalze erfolgen kann, ohne dass auch alle anderen Segmente, die sich in einer Richtung an das auszutauschende Segment anschließen, demontiert werden müssen.

Es ist eine Aufgabe der vorliegenden Erfindung, eine belastbare und gleichzeitig einfach austauschbare Walzeneinrichtung zu schaffen.

Diese Aufgabe wird mit einer Walzeneinrichtung gemäß Anspruch 1 gelöst.

Erfindungsgemäß weist die Walzeneinrichtung einen hohlzylinderförmigen Walzenmantel auf, der um eine Rotationsachse drehbar ist. Eine Außenfläche des Mantels, die bei Betrieb mit der Materialbahn in Kontakt gerät, kann beschichtet sein. Durch eine Beschichtung der Außenfläche kann eine geeignete Oberflächenrauigkeit eingestellt werden, so dass die Walzeneinrichtung auch ohne eigenen Antrieb bei einer Änderung der Geschwindigkeit der Materialbahn beschleunigt werden kann. Eine entsprechende Beschichtung kann beispielsweise eine Molybdänbeschichtung sein.

Die Walzeneinrichtung umfasst ferner einen ersten Lagerabschnitt und einen zweiten Lagerabschnitt, die im Inneren des Walzenmantels angeordnet und dreh- und axialfest mit diesem verbunden sind.

Der erste Lagerabschnitt weist einen ersten Achsfortsatz auf, der derart in einem ersten Aufnahmeabschnitt eines ersten Lagerschilds, das an einer der Stirnseiten des Walzenmantels angeordnet ist, gelagert ist, dass ein Festlager gebildet ist, während der zweite Lagerabschnitt einen zweiten Achsfortsatz aufweist, der derart in einem zweiten Aufnahmeabschnitt eines zweiten Lagerschilds, das an der anderen Stirnseite des Walzenmantels angeordnet ist, gelagert ist, dass ein Loslager gebildet ist.

Durch die stirnseitige Anordnung der Lagerschilde kann die Walzeneinrichtung nach einem Lösen der Lagerschilder voneinander und/oder von einer Tragstruktur der Maschine, in der die Walzeneinrichtung zum Einsatz kommt, leicht entfernt werden.

Die Kombination eines Loslagers und eines Festlagers zur Lagerung der Walzeneinrichtung ermöglicht einerseits die Aufnahme von in axialer Richtung wirkenden Kräften, beispielsweise Längenausdehnungen aufgrund thermischer Effekte. Bei Betriebstemperaturen von beispielsweise 50°C können Wärmeausdehnungen von etwa 2 mm in axialer Richtung auftreten. Bei 75°C können diese etwa 2,2 mm betragen und sind daher nicht ohne Weiteres zu vernachlässigen.

Andererseits ist durch diese Konstruktion eine axiale Bewegung des zweiten Lagerschilds relativ zu dem zweiten Lagerabschnitt - und damit auch relativ zu dem ersten Lagerschild - möglich, so dass deren Abstand bei einer Montage oder Demontage reduziert werden kann. Hierbei ist es in den meisten Fällen gar nicht erforderlich, dass die axiale Beweglichkeit des zweiten Lagerschilds sonderlich groß ist. Ein vergleichsweise kleines Spiel liefert bereits oft den nötigen Bauraum, der die Montage/Demontage der Einrichtung vereinfacht, so dass benachbarte Walzeneinrichtungen nicht demontiert werden müssen. Das Spiel sollte so gewählt sein, dass die Montage/Demontage der Einrichtung sowohl bei erhöhten als auch bei niedrigen Temperaturen möglich ist. Es kann beispielsweise 2 - 3 mm betragen. Das Spiel kann in einem montierten Zustand der Walzeneinrichtung ein Abstand zwischen einem radialen Bund des zweiten Lagerschilds und einer ihm zugewandten Stirnseite des Walzenmantels sein.

Weitere Ausführungsformen der Erfindung sind in den Ansprüchen, der Beschreibung und den beigefügten Zeichnungen angegeben.

Gemäß einer Ausführungsform stehen das erste und das zweite Lagerschild nicht über eine zentrale Achse miteinander in Verbindung. Dadurch baut die Walzeneinrichtung leichter als herkömmliche Einrichtungen dieser Art. Das damit einhergehende geringere Trägheitsmoment erlaubt ein leichteres Mitdrehen oder Beschleunigen der Walzeneinrichtung mit der über sie laufenden Materialbahn. Außerdem werden Resonanzschwingungen vermieden, die bei bekannten Konzepten durch solche zentralen Achsen erzeugt und/oder übertragen werden.

Eine Montage/Demontage der Walzeneinrichtung wird vereinfacht, wenn der erste Aufnahmeabschnitt lösbar mit dem ersten Lagerschild verbunden ist und/oder der zweite Aufnahmeabschnitt lösbar mit dem zweiten Lagerschild verbunden ist.

Gemäß einer weiteren Ausführungsform umfasst das Loslager eine elastische Vorspanneinrichtung, die eine axiale Vorspannkraft erzeugt, die das zweite Lagerschild in Richtung des zweiten Lagerabschnitts drängt. In einem demontieren Zustand verkürzt die Vorspanneinrichtung somit die axiale Länge der Walzeneinrichtung. Dabei entspannt sich die Vorspanneinrichtung zumindest teilweise. Insbesondere ist die Vorspanneinrichtung zwischen einem Lagerring, bevorzugt Außenring, eines Wälzlagers des Loslagers und dem zweiten Aufnahmeabschnitt wirksam. Die Vorspanneinrichtung kann z.B. eine Tellerfeder oder eine Tellerfederpaket sein. Die Eigenschaften der Vorspanneinrichtung sollten so gewählt werden, dass eine hinreichend große Vorspannung auch bei erhöhten Betriebstemperaturen (z.B. 75°C) sichergestellt ist, so dass durch höhere Temperaturen abnehmende Vorspannkräfte durch eine Ausdehnung der Walze ausgeglichen werden. Auch bei Minusgeraden, die etwa bei einem Transport auftreten können, sollte die Vorspannung nicht zu groß werden.

Insbesondere sind das erste und/oder das zweite Lagerschild derart eingerichtet und ausgebildet, dass sie fest an einer ortsfesten Struktur befestigbar sind, z.B. an einer Traverse einer Maschine. Zu diesem Zweck kann das entsprechende Lagerschild mit einem Befestigungsabschnitt versehen sein, der - in axialer Richtung gesehen - radial über die Kontur des Walzenmantels ragt und der insbesondere einen Flanschabschnitt aufweist, der mit der Struktur koppelbar ist, z.B. verschraubt werden kann.

Gemäß einer Ausführungsform sind beide Lagerschilde mit einer ortsfesten Tragstruktur fest verbindbar, um die Lasten gleichmäßig und effizient abzuleiten. In bestimmten Fällen kann es jedoch vorteilhaft sein, dass das erste Lagerschild einen ersten Kopplungsabschnitt aufweist, der mit einem zweiten Kopplungsabschnitt des zweiten Lagerschilds koppelbar ist. Bei dieser Bauform kann es ausreichend sein, wenn lediglich eines der Lagerschilder, insbesondere das erste Lagerschild, mit der Tragstruktur koppelbar ist. Das andere Lagerschild stützt sich dann an dem mit der Tragstruktur gekoppelten Lagerschild ab.

Beispielsweise ist vorgesehen, dass der erste oder der zweite Kopplungsabschnitt einen zentralen Kopplungsachsfortsatz aufweist, der komplementär zu einer zentrale Kopplungsöffnung des zweiten bzw. des ersten Kopplungsabschnitts ausgestaltet ist. Zwei benachbart angeordnete Walzeinrichtungen mit jeweils einem ersten und zweiten Lageschild der vorstehend beschriebenen Art können dann auf einfache Weise miteinander gekoppelt werden. Vorzugsweise ist der Kopplungsachsfortsatz an dem zweiten Lagerschild vorgesehen, die Kopplungsöffnung an dem ersten Lagerschild. Insbesondere umfasst der Kopplungsachsfortsatz ein Außengewinde, dass komplementär zu einem Innengewinde der Kopplungsöffnung ausgestaltet ist.

Ferner ist es denkbar, dass der erste oder der zweite Kopplungsabschnitt einen ringförmigen Bund aufweist, der komplementär zu einer Ringnut in dem zweiten bzw. dem ersten Kopplungsabschnitt ausgestaltet ist.

Beispielsweise weisen die Kopplungsabschnitte die beiden vorstehend beschrieben Kopplungskonzepte auf, um eine besonders gute Zentrierung und Sicherung der beteiligten Komponenten zu erreichen. In diesem Fall können der Bund koaxial zu dem zentralen Kopplungsachsfortsatz und die Ringnut koaxial zu der Kopplungsöffnung angeordnet sein.

Gemäß einer weiteren Ausführungsform ist eine Arretierungseinrichtung vorgesehen, mit der der Walzenmantel drehfest mit dem zweiten Lagerschild koppelbar ist. Der Walzenmantel kann eine Öffnung aufweist und das zweite Lagerschild kann ein Langloch aufweist, dessen Längsachse sich parallel zu der Rotationsachse erstreckt, wobei die Öffnung und das Langloch derart angeordnet sind, dass ein Arretierelement, insbesondere ein Bolzen oder Stift, bei geeigneter relativer Winkellage des Walzenmantels und des zweiten Lagerschilds derart durch die Öffnung gesteckt werden kann, so dass es in das Langloch ragt. Mittels der Arretierungseinrichtung kann die Montage/Demontage der Walzeneinrichtung erleichtert werden, insbesondere wenn diese Prozesse eine Drehung des zweiten Lagerschilds erfordern. Dies kann beispielsweise der Fall sein, wenn die Lagerschilde Kopplungsabschnitte aufweisen, die eine Kopplung mittels einer Gewindeverbindung vorsehen.

Um den Staubschutz zu verbessern, kann zumindest eine zwischen einer Innenoberfläche des Walzenmantels und dem ersten und/oder dem zweiten Aufnahmeabschnitt wirksame Dichteinrichtung vorgesehen sein, insbesondere wobei ein Außendurchmesser des ersten und/oder zweiten Aufnahmeabschnitts nur geringfügig kleiner als ein Innendurchmesser des Walzenmantels ist oder diesem im Wesentlichen entspricht. Bespiele für Dichteinrichtungen sind Filzringdichtungen oder Labyrinthdichtungen.

Die vorliegende Erfindung betrifft ferner eine Walze, insbesondere Leitwalze zur Führung einer Materialbahn, umfassend zumindest eine erste und eine zweite Walzeneinrichtung gemäß zumindest einer der vorstehend beschriebenen Ausführungsformen. Die Walze kann aber auch wesentlich mehr Walzeneinrichtungen der genannten Art umfassen, beispielsweise bis zu 15, insbesondere bis zu 10, bevorzugt bis zu 7 Walzeneinrichtungen, um geforderte Walzenbreiten von beispielsweise 10 m oder mehr zu realisieren.

Insbesondere sind die erste und die zweite Walzeneinrichtung koaxial angeordnet. Gemäß einer Ausführungsform sind alle Walzeneinrichtung der Walze koaxial angeordnet.

Um der Walze die Funktion einer Breitstreckwalze zu verleihen, kann zwischen der zumindest einen ersten Walzeneinrichtung und der zumindest einen zweiten Walzeneinrichtung zumindest eine dritte, insbesondere vierte, fünfte, sechste, Walzeneinrichtung, vorzugsweise mehrere Walzeneinrichtungen, vorgesehen sein, die gemäß zumindest einem der vorstehenden Ansprüche ausgestaltet ist. Die dritte Walzeneinrichtung ist in einem montierten Zustand der Walze versetzt zu und zwischen der ersten und/oder zweiten Walzeneinrichtung angeordnet, so dass eine Achse, um die die Walzeneinrichtungen gemeinsam rotieren, eine Durchbiegung aufweist. Anders ausgedrückt ergibt sich durch eine derartige Anordnung der Walzeneinrichtungen, dass die gemeinsame Rotationsachse aller Walzeneinrichtungen einer Walze nicht mehr parallel zur Maschinenquerrichtung CD ist, sondern die Walze in der Materialbahnmitte in Querrichtung weiter in Richtung der Materialbahn positioniert ist, so dass durch diese Durchbiegung eine Breitstreckung auf die Materialbahn ausgeübt wird, welche die Materialbahn von seiner Mitte in Querrichtung CD zu den beiden Rändern der Materialbahn streckt. Beispielsweise kann die Rotationsachse einer Walzeneinrichtung (oder mehrerer Walzeneinrichtungen) in einem mittleren Bereich der Walze in einer Höhenrichtung (im Folgenden mit z bezeichnet) - also in einer Richtung senkrecht zu einer Förderrichtung der Materialbahn (= Maschinenlaufrichtung oder "machine direction" - MD) und in einer Richtung senkrecht zu der Förderrichtung (= Maschinenquerrichtung oder "cross direction" - CD) - um bis zu 250 mm relativ zu Walzeneinrichtungen am Rand der Walze versetzt sein. Dabei tritt eine Durchbiegung der Achse, um die die Walzeneinrichtungen gemeinsam rotieren, auf.

In diesem Zusammenhang sei darauf hingewiesen, dass die Walze in einer Maschine, in der sie eingesetzt wird, auch so angeordnet sein kann, dass ihre Rotationsachse nicht im Wesentlichen senkrecht zu der Maschinenlaufrichtung steht, d.h. die Maschinenquerrichtung und die Rotationsachse der Walze müssen nicht zwingend parallel angeordnet sein (auch wenn evtl. vorhandene Durchbiegung der Achse "weggedacht" wird). Außerdem kann die Walze derart ausgebildet und eingerichtet sein, dass sie stehend und/oder hängend montierbar ist.

Grundsätzlich können die Walzeneinrichtungen eine Länge/Breite von 700 bis 1500 mm aufweisen. Bei Walzen mit Breitstreckfunktion beträgt sie bevorzugt 700 bis 900 mm, bei reinen Leitwalze bevorzugt 1000 bis 1500 mm.

Der Walzenmantel der ersten und der zweiten Walzeneinrichtung können unterschiedliche axialen Längen/Breiten aufweisen.

Die erfindungsgemäßen Walzen sind bevorzugt so ausgelegt, dass Materialbahngeschwindigkeiten von bis zu 3500 m/min realisiert werden können, was in der Praxis bedeuten kann, dass Rotationsgeschwindigkeiten der Walzen von mehr als 16.000 U/min erreicht werden.

Die vorliegende Erfindung betrifft auch eine Rollenschneide- und/oder Rollenwickelmaschine zum Schneiden und/oder Wickeln einer Materialbahn, insbesondere einer Faserstoffbahn, umfassend zumindest eine Walze gemäß zumindest einer der vorstehend beschriebenen Ausführungsformen.

Es kann vorgesehen sein, dass mehrere Walzen der erfindungsgemäßen Bauweise zum Einsatz gelangen, bevorzugt mehr als 3, insbesondere 5. Ein Großteil der Walzen kann hängend montiert sein (z.B. 4 von 5 Walzen).

Nachfolgend wird die vorliegende Erfindung rein beispielhaft anhand vorteilhafter Ausführungsformen unter Bezugnahme auf die beigefügten Zeichnungen erläutert. Diese zeigen:
- Fig. 1a - 2b: eine Ausführungsform einer Rollenschneidemaschine in verschiedenen Ansichten bzw. Zuständen;
- Fig. 3a und 3b: einen Ausschnitt einer Segmentwalze in hängender Anordnung in verschiedenen Ansichten;
- Fig. 4: eine erste Ausführungsform einer Segmentwalze mit drei erfindungsgemäßen Walzeneinrichtungen;
- Fig. 4a: eine Vergrößerung eines Ausschnitts der Fig. 4;
- Fig. 5: einen Ausschnitt einer zweiten Ausführungsform einer Segmentwalze mit erfindungsgemäßen Walzeneinrichtungen;
- Fig. 6: einen Ausschnitt einer dritten Ausführungsform einer Segmentwalze mit erfindungsgemäßen Walzeneinrichtungen und
- Fig. 6a: eine Vergrößerung eines Ausschnitts der Fig. 6.

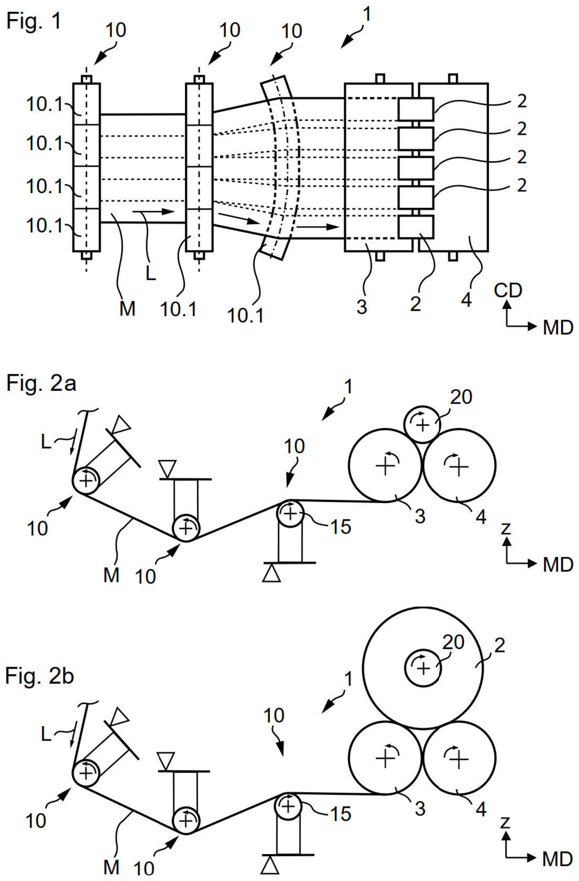

Fig. 1 bis 2b zeigen einen Teil einer Rollenschneidevorrichtung 1. Diese umfasst eine nicht gezeigte Abwickeleinrichtung, in der eine Papierbahn M, die in ihrer Breite im Wesentlichen der Arbeitsbreite einer der Rollenschneidvorrichtung 1 vorgeordneten und hier nicht dargestellten Papiermaschine entspricht, von einer Mutterrolle in einer Förderrichtung L oder Maschinenrichtung MD abgezogen wird. Eine zu der Richtung senkrechte Richtung, die in der Bildebene liegt, wird als Maschinenquerrichtung CD bezeichnet. Senkrecht zu diesen beiden Richtungen steht die Höhenrichtung z.

Eine ebenfalls nicht gezeigte Schneidpartie trennt die Bahn M in Förderrichtung L längs auf. Beispielsweise ist die Schneidpartie zwischen Umlenk- oder Leitwalzen 10 angeordnet. Sie kann diesen auch vor- oder nachgelagert sein.

In Förderrichtung L hinter der rechten Walze 10 angeordnete Walze 15 ist eine Leitwalze mit Breitstreckfunktion. Die aufgetrennten Teilbahnen werden mittels der Walze 15 in Querrichtung CD "verteilt".

Tragwalzen 3, 4 bilden ein Wickelbett mit einer Wickelhülse 20, mit dem der Anfang eines endlichen Abschnittes einer Teilbahn der Materialbahn M verbunden und dann durch fortwährendes Umwickeln unter Ausbildung von so genannten Wickellagen umspannt wird. Fig. 2a zeigt den Anfang dieses Prozesses. In Fig. 2b ist bereits Bahnmaterial auf die Hülse 20 aufgewickelt worden, so dass eine Wickelrolle 2 gebildet wurde.

Den Fig. 2a und 2b ist zu entnehmen, dass die Walzen 10, 15 bedarfsgerecht hängend oder stehend montiert werden können.

Rollenschneidevorrichtungen der vorstehend beschriebenen Art sind grundsätzlich bekannt, beispielsweise aus der WO 2020/177910 A1.

Die Walzen 10, 15 sind Segmentwalzen, die im vorliegenden Beispiel 4 bzw. 5 Walzensegmente 10.1 umfassen. Die Segmente 10.1 der Walzen 10 sind im Wesentlichen baugleich. Dies gilt auch für die Segmente 10.1 der Walze 15. Bei der Walze 15 sind jedoch Segmente 10.1 in einem mittleren Bereich versetzt zu den Segmenten 10.1 am Rand angeordnet. Dadurch ergibt sich eine durchgebogene Rotationsachse der Walze 15 (überhöht dargestellt), wodurch die vorstehend bereits erwähnte Breitstreckfunktion bereitgestellt wird.

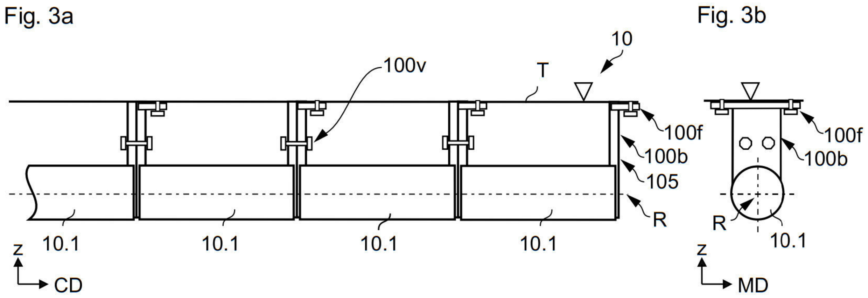

Fig. 3a und 3b zeigen einen Ausschnitt einer der um eine Rotationsachse R drehbaren Walzen 10, die hängend an einer ortsfesten Tragstruktur T der Vorrichtung 1 montiert ist. Sie sind dabei in Lagerschilden 105, 106 gelagert, die wiederum Befestigungsabschnitte 100b aufweisen, die über Flanschabschnitte 100f an der Tragstruktur T verschraubt sind. Zur Erhöhung der Stabilität können benachbarte Schilde 105, 106 miteinander gekoppelt werden (Verschraubung 100v).

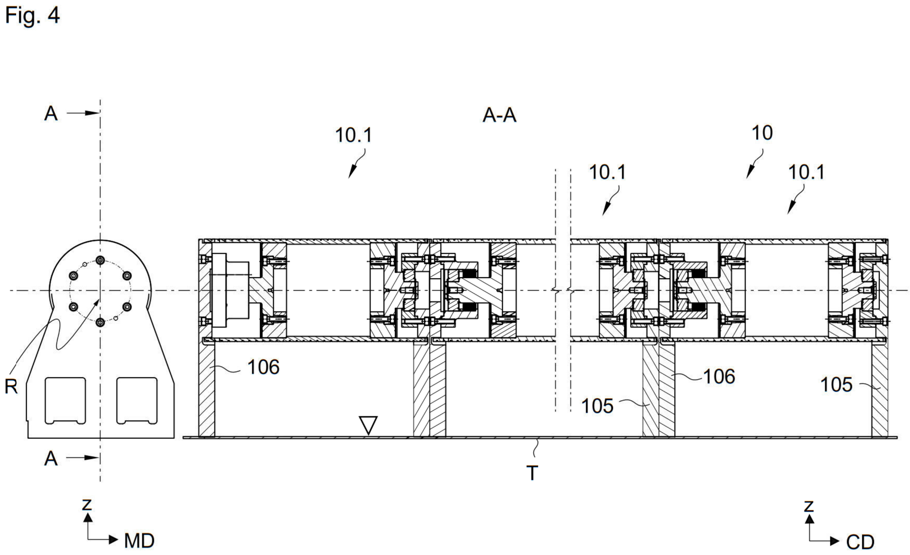

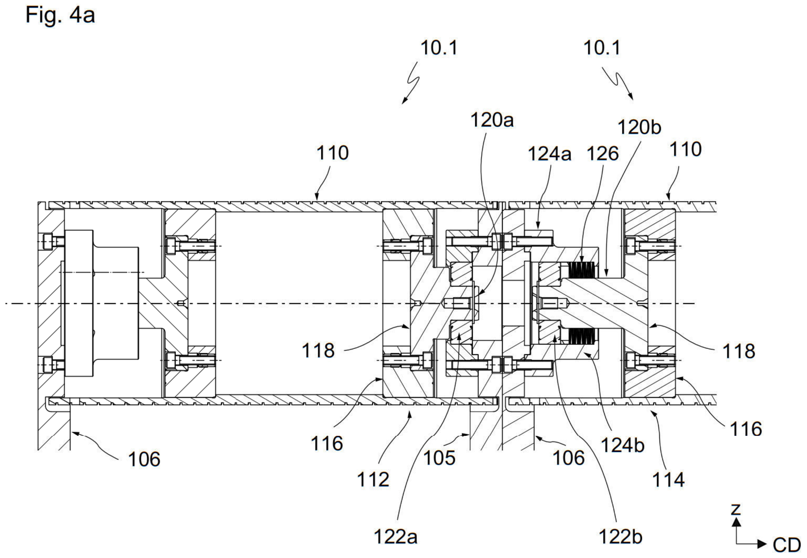

Fig. 4 zeigt eine Ausführungsform einer Leitwalze 10 mit mehreren Segmenten 10.1, die stehend montiert ist, in einer Schnittansicht (rechts) und in einer Seitenansicht (links). Es ist zu erkennen, dass die Segmente 10.1 identisch aufgebaut sind.

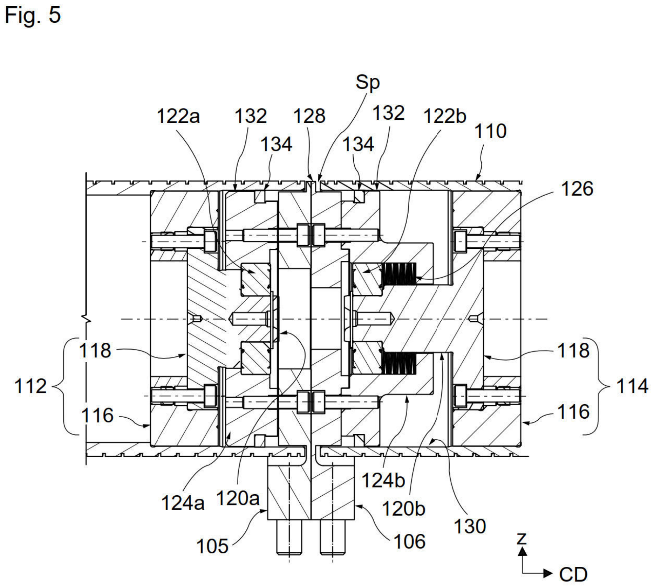

Der innere Aufbau der Segmente 10.1 wird anhand der Fig. 4a erläutert, die eine Vergrößerung eines Ausschnitts der Fig. 4 wiedergibt. Das linke Segment 10.1 ist - bis auf den unteren Teil der Schilde 105, 106 - vollständig gezeigt, während das rechts anschließende Segment 10.1 nur teilweise gezeigt ist. Fig. 5 zeigt eine sehr ähnliche Ausführungsform, die sich nur in wenigen Punkten unterscheidet.

Jedes Segment 10.1 umfasst einen hohlzylindrischen Walzenmantel 110, der einen ersten Lagerabschnitt 112 und einen zweiten Lagerabschnitt 114 aufnimmt, die axial- und drehfest in dem Mantel 110 angeordnet sind. Die Lagerabschnitte 112, 114 umfassen jeweils ein Basisbauteil 116 und ein damit verschraubtes Einsatzteil 118 mit einem Achsfortsatz 120a bzw. 120b.

Der Achsfortsatz 120a des Lagerabschnitts 112 wirkt mit einem Wälzlager 122a zusammen, das axialfest in einem Aufnahmeabschnitt 124a angeordnet ist, der wiederum fest mit dem an einer der Stirnseiten des Segments 10.1 angeordneten Lagerschild 105 verschraubt ist. Das Wälzlager 122a ist durch einen Sprengring auch axialfest an dem Achsfortsatz 120a gesichert. Durch die vorstehend beschriebene Konstruktion wird ein Loslager realisiert. Ein Außenring des Wälzlager 122a ist fest angeordnet, während ein Innenring des Lagers 122a mit dem Achsfortsatz 120a mit dreht.

Die andere Seite des Segments 10.1 wird durch ein Loslager gelagert. Der Achsfortsatz 120b des Lagerabschnitts 114 wirkt mit einem Wälzlager 122b zusammen, das in einem Aufnahmeabschnitt 124b angeordnet ist, der wiederum fest mit dem an der anderen Stirnseite des Segments 10.1 angeordneten Lagerschild 106 verschraubt ist. Das Wälzlager 122a (oder genauer: dessen Innenring) ist durch einen Sprengring axialfest an dem Achsfortsatz 120b gesichert.

Anders als bei dem oben erläuterten Festlager stützt sich ein Außenrings des Wälzlagers 122b aber nicht axialfest direkt an einer Schulter des Aufnahmeabschnitts 124b ab. Zwischen der Schulter und dem Außenring des Lagers 122b ist ein Tellerfederpaket 126 angeordnet, dass ein Vorspannkraft bereitstellt, die letztlich das Lagerschild 106 nach rechts drängt.

Der Außenring des Wälzlager 122a ist somit axial beweglich relativ zu dem Aufnahmeabschnitt 124b. Das Lager 122b ist jedoch so ausgelegt, dass sein Innenring mit dem Achsfortsatz 120a mit dreht.

In einem demontierten Zustand des Segments 10.1 wird das Lagerschild 106 durch die Vorspannkraft nach rechts gegen eine ringförmige Stirnfläche des Mantels 110 gedrückt bis ein Bund 128 (siehe Fig. 5) an dieser anschlägt. Dabei wurde ein Spalt oder Spiel Sp durchfahren (z.B. 2 bis 4 mm, insbesondere 2 bis 3 mm). Dies bedeutet, dass das Segment 10.1 um diesen Betrag in axialer Richtung kürzer ist als in einem montierten Zustand. Unter Nutzung des Spiels Sp kann das Segment 10.1 zwischen montierten Segmenten 10.1 platziert werden. Dann wird das Lagerschild 106 nach links gezogen und an der Tragstruktur T verschraubt. Dabei wird die Vorspannung erhöht und die "Betriebslänge" des Segments 10.1 erreicht. Die Demontage erfolgt in umgekehrter Reihenfolge. Die benachbarten Segmente 10.1 müssen dabei nicht demontiert werden, was die zum Segmentwechsel benötigte Arbeitszeit - verglichen mit herkömmlichen Systemen - auf 1/3 reduziert. Auf die Vorteile einer vorgespannten Loslager-Festlager-Lagerung bei Betrieb der Walze 10 wurde eingangs bereits hingewiesen.

Eine Zentrierung der Walzensegmente 10.1 erfolgt beispielsweise durch einen außenliegenden Stift, eine Passschraube oder einen gemeinsamen Anschlag. Bei einer Konfiguration der Segmente 10.1 als Breitstreckwalze wird die Verstellung senkrecht zur Walzenlinienachse über einen gemeinsamen Anschlag vorgenommen, um ein synchrones Verstellen des zugehörigen Nachbarsegments zu erreichen.

Abweichend von der Ausführungsform gemäß Fig. 4, 4a können zwischen den Aufnahmeabschnitten 124a, 124b und einer Mantelinnenwand 130 des Walzenmantels 110 dichtende Komponenten vorgesehen sein, um den Staubschutz zu verbessern. Zu diesen Zweck können sich die Aufnahmeabschnitte 124a, 124b zumindest abschnittsweise bis (fast) zu der Mantelinnenwand 130 erstrecken. Im vorliegenden Beispiel sind jeweils eine Labyrinthdichtung 132 und eine Filzringdichtung 134 vorgesehen.

Es kann vorgesehen sein, dass nur das festlagerseitige Lagerschild 105 mit der Tragstruktur T (z.B. mit einer Traverse) verbunden ist. Das andere Lagerschild 106 ist dann mit dem Lagerschild 105 verbunden und stützt sich über dieses auf der Tragstruktur T ab. Dazu kann das Lagerschild 106 einen zentrierenden Bund aufweisen, der sich in axialer Richtung erstreckt und der in montiertem Zustand in eine entsprechende Nut an dem Lagerschild 105 ragt. Dieser Bund muss eine geringere axiale Erstreckung als das Spiel Sp aufweisen, um einer Montage/Demontage nicht im Wege zu stehen.

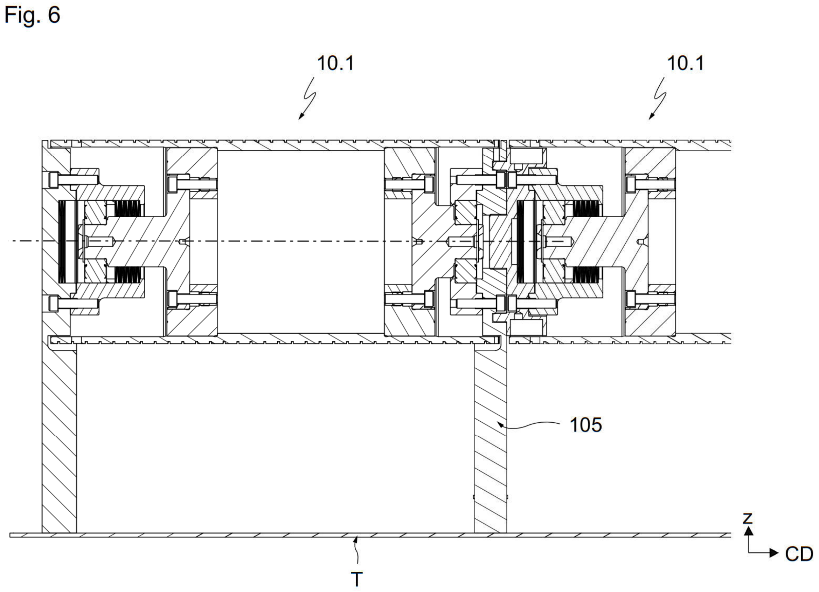

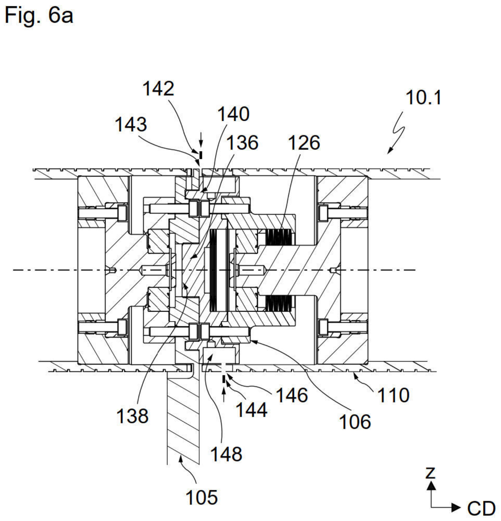

In der Fig. 6 und 6a zeigen ein Beispiel für eine Kopplung der Lagerschilde 105, 106. Das Lagerschild 106 weist einen zentralen Kopplungsachsfortsatz 136 mit einem Außengewinde auf, der in eine entsprechende Kopplungsöffnung 138 des Lagerschilds 105 mit einem komplementären Innengewinde einschraubbar ist. Außerdem ist ein Kopplungsbund 140 an dem Schild 106 vorgesehen, der sich in eine entsprechende Nut an dem Schild 105 erstreckt, um die Zentrierung zu vereinfachen. Zur Sicherung der Kopplung kann ein Gewindestift 142 durch eine Mantelöffnung 143 des Walzenmantels 110 in eine Bohrung des Lagerschilds 105 eingebracht werden, der in moniertem Zustand mit dem Bund 140 in Kontakt steht und diesen durch Reib- und/oder Formschluss in axialer Richtung sichert.

Bei der Demontage des rechten Segments 10.1 wird der Stift 142 gelöst. Anschließend werden der Mantel 110 und das Lagerschild 106 drehfest miteinander gekoppelt, indem ein Bolzen 144 o.ä. durch eine Mantelöffnung 146 in ein sich in axialer Richtung erstreckendes Langloch 148 in dem Lagerschild 106 gesteckt wird. Nun wird der Mantel 110 gedreht und das mit ihm gekoppelte Lagerschild 106 dreht sich mit, wodurch der Kopplungsachsfortsatz 136 gegen die Vorspannkraft des Tellerfederpakets 126 aus der Kopplungsöffnung 138 geschraubt wird. Dabei wird das Langloch 148 in axialer Richtung entlang des Bolzens 144 verfahren. Der Drehbewegung des Lagerschilds 106 stehen der Kopplungsbund 140 und die entsprechende Nut nicht entgegen, da sie ringförmig sind.

Sobald das Lagerschild 106 weiter nach rechts bewegt wurde als sich die Kopplungskomponenten 136 und 140 in axialer Richtung erstrecken, kann das Segment 10.1 entnommen werden. Daher ist darauf zu achten, dass das Spiel Sp größer ist als die axiale Erstreckung der Kopplungskomponenten 136, 140.

Zur Vermeidung einer Unwucht, die bei den hohen Rotationsgeschwindigkeiten schon bei geringen Ungleichmäßigkeiten der Masseverteilung erheblich sind, müssen die Komponenten zur Sicherung der Kopplung (Mantelöffnung 143, Stift 142) und die im Betrieb rotierende Komponente zur Arretierung des Lagerschilds 106 (Mantelöffnung 146) symmetrisch, d.h. um 180° versetzt, "gespiegelt" werden.

Bei der Demontage eines Segments 10.1 gemäß den Fig. 6, 6a muss das Lagerschild 106 des benachbarten Segments 10.1, das in das Lagerschild 105 des zu demontierenden Segments 10.1 eingreift, ebenfalls gelöst werden. Das benachbarte Segment 10.1 muss dann von außen abgestützt werden. Bei hängender Anordnung muss die Abstützung in der Regel über eine separat anzuschraubende Vorrichtung oder z.B. einen Kran erfolgen.

Den Ausführungsbeispielen ist gemein, dass keine zentrale Achse, sei sie bei Betreib ruhend oder rotierend, vorgesehen ist, was zwar die Belastung der Lagerschilde erhöht, jedoch erhebliche Gewichts- und Trägheitsvorteile mit sich bringt. Die Lagerkonstruktion mit Spiel und Vorspannung erleichtert einerseits die Montage/Demontage. Anderseits können auch Temperaturausdehnungen und in axialer Richtung wirkende Kräfte aufgenommen und kompensiert werden. Das Erfindungskonzept ist überdies bei Segmentwalzen unterschiedlichster Art und Verwendung einsetzbar.

### Bezugszeichenliste

- 1: Rollenschneidevorrichtung
- 2: Wickelrolle
- 3, 4: Tragwalze
- 10: Leitwalze
- 10.1: Walzensegment
- 15: Leitwalze mit Breitstreckfunktion
- 20: Wickelhülse
- 100b: Befestigungsabschnitt
- 100f: Flanschabschnitt
- 100v: Verschraubung
- 105, 106: Lagerschild
- 110: Walzenmantel
- 112, 114: Lagerabschnitt
- 116: Basisbauteil
- 118: Einsatzteil
- 120a, 120b: Achsfortsatz
- 122a, 122b: Wälzlager
- 124a, 124b: Aufnahmeabschnitt
- 126: Tellerfederpaket
- 128: Bund
- 130: Mantelinnenwand
- 132: Labyrinthdichtung
- 134: Filzringdichtung
- 136: Kopplungsachsfortsatz
- 138: Kopplungsöffnung
- 140: Kopplungsbund
- 142: Gewindestift
- 143, 146: Mantelöffnung
- 146: Bolzen
- 148: Langloch
- M: Materialbahn
- L: Förderrichtung
- MD: Maschinenlaufrichtung
- CD: Maschinenquerrichtung
- z: Höhenrichtung
- T: Tragstruktur
- Sp: Spalt / Spiel

## Patentansprüche

1. Walzeneinrichtung zur Führung einer Materialbahn, insbesondere einer Faserstoffbahn, umfassend:
einen hohlzylinderförmigen Walzenmantel (110) der um eine Rotationsachse (R) drehbar ist,
einen ersten Lagerabschnitt (112) und einen zweiten Lagerabschnitt (114), die im Inneren des Walzenmantels angeordnet und dreh- und axialfest mit diesem verbunden sind,
wobei der erste Lagerabschnitt einen ersten Achsfortsatz (120a) aufweist, der derart in einem ersten Aufnahmeabschnitt (124a) eines ersten Lagerschilds (105), das an einer der Stirnseiten des Walzenmantels angeordnet ist, gelagert ist, dass ein Festlager gebildet ist, und
wobei der zweite Lagerabschnitt einen zweiten Achsfortsatz (120b) aufweist, der derart in einem zweiten Aufnahmeabschnitt (124b) eines zweiten Lagerschilds (106), das an der anderen Stirnseite des Walzenmantels angeordnet ist, gelagert ist, dass ein Loslager gebildet ist.

2. Walzeneinrichtung nach Anspruch 1,
**dadurch gekennzeichnet, dass**
das erste und das zweite Lagerschild (105, 106) nicht über eine zentrale Achse miteinander in Verbindung stehen.

3. Walzeneinrichtung nach Anspruch 1 oder 2,
**dadurch gekennzeichnet, dass**
der ersten Aufnahmeabschnitt (124a) lösbar mit dem ersten Lagerschild (105) verbunden ist und/oder dass der zweite Aufnahmeabschnitt (124b) lösbar mit dem zweiten Lagerschild (106) verbunden ist.

4. Walzeneinrichtung nach zumindest einem der vorstehenden Ansprüche, **dadurch gekennzeichnet, dass**
das Loslager ein Wälzlager (122b) und eine elastische Vorspanneinrichtung (126) umfasst, die eine axiale Vorspannkraft erzeugt, die das zweite Lagerschild (106) in Richtung des zweiten Lagerabschnitts (114) drängt, insbesondere wobei die Vorspanneinrichtung zwischen einem Lagerring, bevorzugt Außenring, eines Wälzlagers (122b) des Loslagers und dem zweiten Aufnahmeabschnitt (124b) wirksam ist.

5. Walzeneinrichtung nach zumindest einem der vorstehenden Ansprüche, **dadurch gekennzeichnet, dass**
das erste und/oder das zweite Lagerschild (105, 106) derart eingerichtet und ausgebildet sind, dass sie fest an einer ortsfesten Struktur (T) befestigbar sind.

6. Walzeneinrichtung nach zumindest einem der vorstehenden Ansprüche, **dadurch gekennzeichnet, dass**
das erste Lagerschild (105) einen ersten Kopplungsabschnitt (138) aufweist, der mit einem zweiten Kopplungsabschnitt (136, 140) des zweiten Lagerschilds (106) koppelbar ist.

7. Walzeneinrichtung nach Anspruch 6,
**dadurch gekennzeichnet, dass**
der erste oder der zweite Kopplungsabschnitt einen zentralen Kopplungsachsfortsatz (136) aufweist, der komplementär zu einer zentrale Kopplungsöffnung (138) des zweiten bzw. des ersten Kopplungsabschnitts ausgestaltet ist, insbesondere umfasst der Kopplungsachsfortsatz ein Außengewinde, dass komplementär zu einem Innengewinde der Kopplungsöffnung ausgestaltet ist.

8. Walzeneinrichtung nach zumindest einem der vorstehenden Ansprüche, **dadurch gekennzeichnet, dass**
der erste oder der zweite Kopplungsabschnitt einen ringförmigen Bund (140) aufweist, der komplementär zu einer Ringnut in dem zweiten bzw. dem ersten Kopplungsabschnitt ausgestaltet ist.

9. Walzeneinrichtung nach zumindest einem der vorstehenden Ansprüche, **dadurch gekennzeichnet, dass**
eine Arretierungseinrichtung (144, 146, 148) vorgesehen ist, mit der der Walzenmantel (110) drehfest mit dem zweiten Lagerschild (106) koppelbar ist.

10. Walzeneinrichtung nach Anspruch 9,
**dadurch gekennzeichnet, dass**
der Walzenmantel (110) eine Öffnung (146) aufweist und das zweite Lagerschild (106) ein Langloch (148) aufweist, dessen Längsachse sich parallel zu der Rotationsachse (R) erstreckt, wobei die Öffnung und das Langloch derart angeordnet sind, dass ein Arretierelement, insbesondere ein Bolzen (144) oder Stift, bei geeigneter relativer Winkellage des Walzenmantels und des zweiten Lagerschilds derart durch die Öffnung gesteckt werden kann, so dass es in das Langloch ragt.

11. Walzeneinrichtung nach zumindest einem der vorstehenden Ansprüche, **dadurch gekennzeichnet, dass**
zumindest ein zwischen einer Innenoberfläche (130) des Walzenmantels (110) und dem ersten und/oder dem zweiten Aufnahmeabschnitt (124a, 124b) wirksames Dichtungselement (132, 134) vorgesehen ist, insbesondere wobei ein Außendurchmesser des ersten und/oder zweiten Aufnahmeabschnitts nur geringfügig kleiner als ein Innendurchmesser des Walzenmantels ist oder diesem im Wesentlichen entspricht.

12. Walze, insbesondere Leitwalze zur Führung einer Materialbahn, umfassend zumindest eine erste und eine zweite Walzeneinrichtung (10.1) gemäß zumindest einem der vorstehenden Ansprüche, insbesondere wobei die erste und die zweite Walzeneinrichtung koaxial angeordnet sind.

13. Walze nach Anspruch 12,
**dadurch gekennzeichnet, dass**
zwischen der zumindest einen ersten Walzeneinrichtung (10.1) und der zumindest einen zweiten Walzeneinrichtung (10.1) zumindest eine dritte Walzeneinrichtung (10.1) vorgesehen ist, die gemäß zumindest einem der vorstehenden Ansprüche ausgestaltet ist und die in einem montierten Zustand der Walze (15) versetzt zu der ersten und/oder zweiten Walzeneinrichtung angeordnet ist, so dass eine Achse, um die die Walzeneinrichtungen gemeinsam rotieren, eine Durchbiegung aufweist.

14. Walze nach Anspruch 12 oder 13,
**dadurch gekennzeichnet, dass**
der Walzenmantel (110) der ersten und der zweiten Walzeneinrichtung (10.1) unterschiedlichen axialen Längen aufweisen.

15. Rollenschneide- und/oder Rollenwickelmaschine zum Schneiden und/oder Wickeln einer Materialbahn, insbesondere einer Faserstoffbahn, umfassend zumindest eine Walze (10, 15) gemäß zumindest einem der Ansprüche 12 bis 14.
